Europäisches Patentamt

European Patent Office

Office européen des brevets

(19)

(11) Veröffentlichungsnummer: **0 265 439**
**B1**

(12) **EUROPÄISCHE PATENTSCHRIFT**

(45) Veröffentlichungstag der Patentschrift: **24.10.90**

(51) Int. Cl.⁵: **H 02 K 7/11**

(21) Anmeldenummer: **86905272.0**

(22) Anmeldetag: **20.08.86**

(86) Internationale Anmeldenummer:
**PCT/EP86/00489**

(87) Internationale Veröffentlichungsnummer:
**WO 87/01526 12.03.87 Gazette 87/06**

(54) **ELEKTRISCHE STELLEINHEIT.**

(30) Priorität: **30.08.85 PCt/ep85/00440**

(43) Veröffentlichungstag der Anmeldung:
**04.05.88 Patentblatt 88/18**

(45) Bekanntmachung des Hinweises auf die
Patenterteilung:
**24.10.90 Patentblatt 90/43**

(84) Benannte Vertragsstaaten:
**DE GB IT**

(56) Entgegenhaltungen:
**EP-A-0 111 350**
**EP-A-0 121 497**
**FR-A-2 365 235**
**FR-A-2 511 102**
**GB-A-1 127 628**

**Antriebstechnik, Band 24, nr. 6, Juni 1985,
"Kupplungen + Bremsen: Exakte
Zugkraftregelung durch Hysterese-Kupplungen
und -Bremsen", Seiten 42-44**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **WINKELMANN, Siegfried
Birkensteige 15
D-7992 Tettnang (DE)**

(74) Vertreter: **Raue, Reimund
Zahnradfabrik Friedrichshafen AG Löwentaler
Strasse 100 Postfach 2520
D-7990 Friedrichshafen 1 (DE)**

## Beschreibung

Die Erfindung betrifft eine elektrische Stelleinheit nach dem Oberbegriff des Anspruchs 1.

Fur derartige Stelleinheiten gibt es viele Anwendungsfälle, und zwar überall dort, wo translatorische Stellbewegungen erforderlich sind, Als Beispiel wird die Pinole in Reitstöcken von Schleifmaschinen genannt. Dabei treibt in der Regel ein Elektromotor über einen Schraubentrieb, bestehend aus Spindel und Mutter, auf ein Stellglied. Die so erzeugte Linearbewegung wird zu Stellzwecken benutzt, wobei die Stellkraft eingestellt und begrenzt wird. Zur Begrenzung der Kraft ist es bekannt, z. B. gemäß FR 23 65 235 bzw. DE—C—27 17 969 den Stellantrieb mit einer Hysteresekupplung auszustatten. Die dort vorgesehene Anordnung sieht noch ein aufwendiges Zwischengetriebe vor und erlaubt keine Steuerung des Drehmomentes mit einer eigenen Spule der Hysteresekupplung.

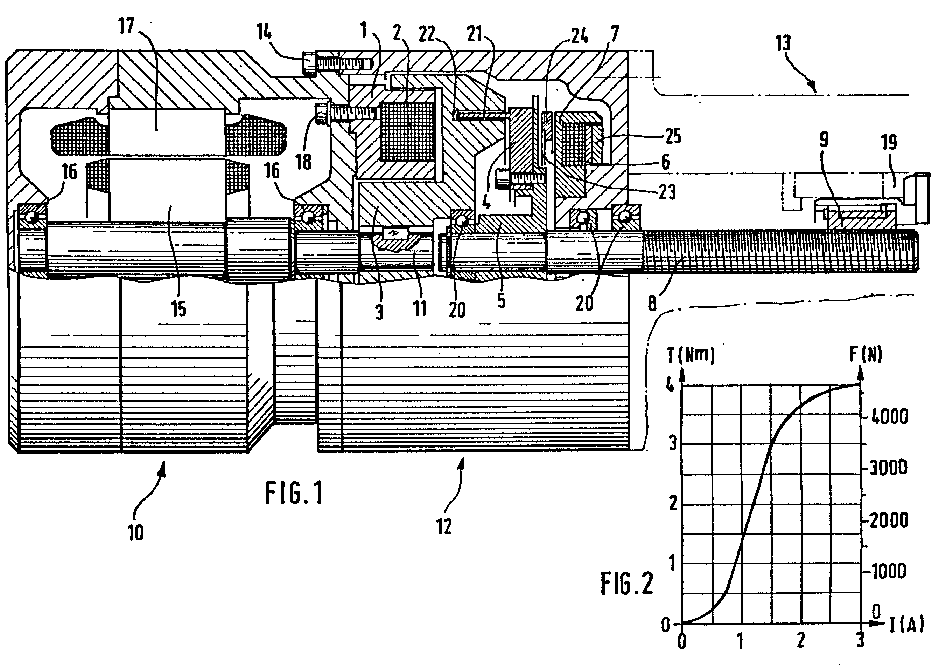

Zwar sind Einrichtungen zur Momentbegrenzung mittels Hysteresekupplungen z. B. laut "Antriebstechnik" Band 24 Nr. 6, Juni 1985, S. 42/44 nach Fig. 2/3 bekannt, jedoch fehlen Lösungen, durch die für den Zusammenbau von Motor, Kupplung und Getriebe ohne Zwischengetriebe insgesamt kompaktere Anordnungen verfügbar wären.

Der Erfindung liegt die Aufgabe zugrunde, mit einfachen Mitteln eine elektrische Stelleinrichtung zu schaffen, die sowohl eine sehr genaue Krafteinstellung/-begrenzung auch während des Andrückvorganges ermöglicht als auch den Zusammenbau von Motor, Kupplung und Getriebe kompakter und rationeller ermöglicht.

Diese Aufgabe wird erfindungsgemäß durch die Merkmale des ersten Anspruchs gelöst.

Eine räumlich einfache und funktionsmäßig wirkungsvolle Gestaltung und Anordnung der Hysteresekupplung erhält man, wenn der Motorflansch als Träger sowohl für das Kupplungsgehäuse als auch für die Spule verwendet wird und wenn dabei der Kupplungsrotor ohne eine Zwischengetriebe auf der Motorwelle angeordnet ist und direkt mit dem Anker auf der Spindel zusammenwirkt. Der Anker der Hysteresekupplung greift dabei mit einem zylindrischen Ansatz in eine axial gerichtete Ringnut des Rotors der Hysteresekupplung ein, wobei die zylindrischen Begrenzungsflächen der Ringnut die Polflächen bilden.

Damit mit Erreichen des Endzustandes der Stellbewegung die elektrische Versorgung abgestellt werden kann, wird vorgeschlagen, daß parallel zur Hysteresekupplung eine durch einen Dauermagneten erregte Reibungsbremse an der Spindel angreift. Dabei wird die mit der Spindel rotierende Reibscheibe zweckmäßig über eine Membranfeder mit dem Flansch verbunden, der zugleich den Anker der Hysteresekupplung trägt.

In der Zeichnung ist ein Ausführungsbeispiel der Erfindung schematisch dargestellt.

Fig. 1 zeigt einen teilweisen Längsschnitt durch eine erfindungsgemäße Stelleinheit.

Fig. 2 zeigt den Ansteig des Drehmoments über den Erregerstrom.

Die Stelleinheit besteht aus einem Elektromotor 10, einer Hysteresekupplung 12 und einem Getriebe 13, deren Gehäuse durch Befestigungsschrauben 14 miteinander verbunden sind. Der Elektromotor 10 hat üblicherweise einen Motoranker 15, der auf einer Motorwelle 11 befestigt ist, die ihrerseits über Wälzlager 16 im Motorgehäuse gelagert ist. Im Motorgehäuse ist ferner ein Motorstator 17 angeordnet.

Die Motorwelle 11 treibt einen Rotor 3 der Hysteresekupplung 12 an. In diesen greift mit geringem Spiel ein am Elektromotor 10 mittels Schrauben 18 befestigter Magnetkörper 1 mit geringem Spiel ein, in dem eine Spule 2 angeordnet ist. Die Stromzufuhr zum Elektromotor 10 und zur Spule 2 erfolgt in üblicher Weise und ist nicht besonders dargestellt.

Das Getriebe 13 besteht aus einer Spindel 8 und einer Mutter 9, die trieblich mit einem Stellglied 19 verbunden ist. Die Spindel ist über Kugellager 20 gegenüber den Gehäusen bzw. dem Rotor 3 drehbar gelagert.

Auf der Spindel ist ein Flansch 5 befestigt, der einen Anker 4 trägt. Dieser weist einen zylindrischen Ansatz 21 auf, der in eine entsprechende Ringnut 22 des Rotors 3 mit geringem radialen Spiel eingreift.

Am Flansch 5 ist über eine Membranfeder 23 eine Reibscheibe 24 einer durch einen Dauermagneten 25 erregten Reibungskupplung 7 befestigt. Das magnetische Feld des Dauermagneten 25 wird durch das magnetische Feld einer elektrischen Spule 6 während der Erregung der Hysteresekupplung 12 geschwächt. Die Funktion der Stelleinheit ist wie folgt:

Der Elektromotor 10 treibt mit seiner Motorwelle 1 den Rotor 3 an, der das Drehmoment auf den Anker 4 überträgt. Dieser dreht sich mit dem Flansch 5 und der Spindel 8, die die Mutter 9 und damit das Stellglied 19 in axialer Richtung verschiebt. Das vom Rotor 3 auf den Anker 4 übertragbare Drehmoment T ist abhängig vom Erregerstrom I in der Spule 2. Die Abhängigkeit ist in Fig. 2 dargestellt. Durch die Regelung des Erregerstroms kann somit das übertragbare Drehmoment T und damit die Stellkraft F am Stellglied 19 präzise eingestellt werden. Wird nach erfolgter Einstellung der Stellantrieb abgeschaltet, werden die Spulen 2 und 26 ebenfalls stromlos. Damit wirkt das Magnetfeld des Dauermagneten ungeschwächt auf die Reibscheibe 24 der Reibbremse 7 und schließt diese, so daß der Stellantrieb in der eingestellten Position verharrt.

Bezugszeichen

1 Magnetkörper
2 Spule
3 Rotor
4 Anker
5 Flansch
6 elektrische Spule
7 Reibbremse
8 Spindel
9 Mutter
10 Elektromotor
11 Elektrowelle
12 Hysteresekupplung
13 Getriebe
14 Befestigungsschrauben
15 Motoranker
16 Wälzlager
17 Motorstator
18 Schrauben
19 Stellglied
20 Kugellager
21 zyl. Ansatz
22 Ringnut
23 Membranfeder
24 Reibscheibe
25 Dauermagnet

## Patentansprüche

1. Elektrische Stelleinheit mit einem Elektromotor (10), einem von diesem angetriebenen Getriebe (13) zur Umsetzung der Rotationsbewegung in eine Translationsbewegung und einer zwischen Motor und Getriebe angeordneten elektromagnetischen Hysteresekupplung (12) zur Begrenzung des übertragbaren Moments (Kraft), dadurch gekennzeichnet,

daß an einem Flansch des Elektro-Motors (10) eine Spule (2) befestigt ist, welche von einem ebenfalls am Flansch des Elektromotors (10) befestigten Magnetkörper (1) und mit diesem von einem Gehäuse der Hysteresekupplung (12) umschlossen ist,

und daß der Erregerstrom (I) der Spule (2) das maximal übertragbare Drehmoment (t) allein steuert,

wobei die Hysteresekupplung (12) einen Anker (4) hat, der mit einem Eingangswelle (8) des Getriebes (13) über einen Flansch (5) drehfest verbunden ist

und mit einem zylindrischen Ansatz (21) in eine axiale Ringnut (22) eines Rotors (3) der Hysteresekupplung (12) eintaucht,

wobei der Rotor (3) auf der Welle (11) des Elektromotors (10) festgesetzt ist.

2. Elektrische Stelleinheit nach Anspruch 1, dadurch gekennzeichnet, daß das Getriebe (13) ein Spindelgetriebe ist, an dessen Spindel (8) parallel zur Hysteresekupplung (12) eine durch einen Dauermagneten (25) erregte Reibungsbremse (11) angreift.

3. Elektrische Stelleinheit nach Anspruch 2, dadurch gekennzeichnet, daß eine Reibscheibe (24) der Reibkupplung (7) mit dem Flansch (5) des Ankers (4) über eine Membranfeder (23) drehfest verbunden ist.

## Revendications

1. Actuateur électrique comprenant un moteur électrique (10), réducteur entraîne par ce moteur (13) permettant de transformer le mouvement de rotation en un mouvement de translation, et un embrayage à hystérésis électromagnétique (12) monté entre le moteur et le réducteu visant à limiter le couple (puissance) transmissible et caractérisé en ce

qu'un bobinage (2) est fixé à une bride du moteur électrique (10), lequel bobinage est entouré d'un corps aimanté (1) également fixé sur la bride du moteur électrique (10) et lui-même entouré d'un carter de l'embrayage à hystérésis (12)

et que seul le courant d'excitation (I) du bobinage (2) commande le couple maximal transmissible (t),

l'embrayage à hystérésis (12) possédant un induit (4) monté solidairement sur un arbre d'entrée (8) du réducteur (13) au moyen d'une bride (5)

et immergeant avec un épaulement cylindrique (21) dans une gorge axiale circulaire (22) d'un rotor (3) de l'embrayage à hystérésis (12),

le rotor (3) étant fixé sur l'arbre (11) du moteur electrique (10).

2. Actuateur électrique selon la revendication 1, caractérisé en ce que le réducteur (13) est un réducteur à axe sur lequel axe (8) est appliqué, parallèlement à l'embrayage à hystérésis (12), un frein à fiction (11) excité par un aimant permanent (25).

3. Actuateur électrique selon la revendication 2, caractérisé en ce qu'une rondelle de friction (24) de l'embrayage de friction (7) est montée solidairement sur la bride (5) de l'induit (4) au moyen d'un ressort diaphragme (23).

## Claims

1. An electrical adjusting unit having an electric motor (10), a transmission unit (13) driven by the electric motor for converting the rotary movement to a translational movement, and an electromagnetic hysteresis clutch (12), disposed between the motor and the transmission unit, for limiting the transmissible moment (force), characterised in that

a coil (2) is secured to a flange of the electric motor (10) and is surrounded by a magnetic body (1), likewise secured to the flange of the electric motor (10), and, together with the magnetic body, is surrounded by a housing of the hysteresis clutch (12),

and that the excitation current (I) of the coil (2) alone controls the maximally transmissible torque (t),

wherein the hysteresis clutch (12) has an armature (4) which is connected to an input shaft (8) of the transmission unit (13) in a rotationally fixed manner by way of a flange (5)

and has a cylindrical projection (21) which enters an axial annular groove (22) of a rotor (3) of the hysteresis clutch (12),

the rotor (3) being fixed on the shaft (11) of the electric motor (10).

2. An electrical adjusting unit as claimed in claim 1, characterised in that the transmission unit (13) is a spindle transmission unit whose spindle (8) is acted upon parallel to the hysteresis clutch (12) by a friction brake (11) energized by a permanent magnet (25).

3. An electrical adjusting unit as claimed in claim 2, characterised in that a friction disc (24) of the friction clutch (7) is connected to the flange (5) of the armature (4) in a rotationally fixed manner by way of a diaphragm spring (23).

FIG.1

FIG.2